# EUROPEAN PATENT APPLICATION

(11) **EP 1 190 951 A1**
(43) Date of publication of application: **27.03.2002**
(21) Application number: 01203564.8
(22) Date of filing: 20.09.2001
(51) Int. Cl.: B65D 5/74

(54) **Containers having spout and process for producing same**

(30) Priority: 21.09.2000 JP 2000286448
(71) Applicant: Shikoku Kakoki Co., Ltd., Itano-gun, Tokushima 771-0287 (JP)
(72) Inventor: Iwano, Fumiyuki, Shikoku Kakoki Co., Ltd., Itano-gun, Tokushima 771-0287 (JP); Fujikawa, Yasuji, Shikoku Kakoki Co., Ltd., Itano-gun, Tokushima 771-0287 (JP); Shinohara, Mitsuhiko, Shikoku Kakoki Co., Ltd., Itano-gun, Tokushima 771-0287 (JP); Ueda, Michio, Shikoku Kakoki Co., Ltd., Itano-gun, Tokushima 771-0287 (JP)
(74) Representative: Dorna, Peter

(57) **Abstract**

A container (1) having a spout (4) of thermoplastic synthetic resin fixed to an outlet edge portion defining a liquid outlet (3) formed in a top portion of the container (1). The outlet edge portion of the container (1) is covered with a thermoplastic synthetic resin layer (2) at least over inner and outer surfaces thereof. The spout (4) comprises a tubular body (5), and inner and outer two outward flanges (6,7) formed at one end of the tubular body (5) integrally therewith and holding the outlet edge portion of the container (1) therebetween from inside and outside. The inner and outer flanges (6,7) of the spout (4) are fixed respectively to the inner and outer surfaces of the outlet edge portion of the container (1).

## Description

### BACKGROUND OF THE INVENTION

The present invention relates to containers having a spout for containing beverages such as fruit juice, milk or sake, and also to a process for producing the same.

Such containers having a spout are conventionally produced in the following manner. Prepared first by injection molding is a spout of thermoplastic synthetic resin which comprises a tubular body and an outward flange formed at one end of the tubular body integrally therewith. The spout is joined to a container covered with a thermoplastic synthetic resin at least over the inner and outer surfaces thereof by inserting the tubular body of the spout through a liquid outlet of the container from inside to position the outward flange on the inner surface of an outlet edge portion of the container defining the liquid outlet, then clamping the container outlet edge portion and the outward flange by an ultrasonic horn and an anvil, and causing the horn to produce ultrasonic waves to join the outward flange to the inner surface of the outlet edge portion by heat sealing.

In view of work efficiency of the conventional process in inserting the spout tubular body through the liquid outlet, the diameter of the liquid outlet is made slightly greater than the outside diameter of the tubular body, so that the inner periphery of the edge portion defining the outlet is not joined to the outer periphery of the tubular body by heat sealing, permitting a small clearance to remain therebetween. It is therefore impossible to thoroughly sterilize the portions defining the clearance to result in a reduced antiseptic effect. Moreover, the presence of the clearance makes the container appear less aesthetic and less sanitary.

### SUMMARY OF THE INVENTION

An object of the present invention is to overcome the above problem and to provide containers having a spout which are improved in antiseptic effect over conventional ones and appear more aesthetic and sanitary than conventionally, and a process for producing such containers.

The present invention provides a container having a spout of thermoplastic synthetic resin fixed to an outlet edge portion defining a liquid outlet formed in a top portion of the container, the outlet edge portion of the container being covered with a thermoplastic synthetic resin layer at least over inner and outer surfaces thereof, the spout comprising a tubular body, and inner and outer two outward flanges formed at one end of the tubular body integrally therewith and holding the outlet edge portion of the container therebetween from inside and outside, the inner and outer flanges being fixed respectively to the inner and outer surfaces of the outlet edge portion of the container.

With the container of the present invention, the spout has inner and outer two outward flanges formed at one end of its tubular body integrally therewith and holding the outlet edge portion of the container therebetween from inside and outside. The two outward flanges are fixedly joined respectively to the inner and outer surfaces of the outlet edge portion of the container. It is therefore unlikely that a clearance visible from outside will be present in the liquid outlet around the tubular body. This ensures effective sterilization to achieve an improved antiseptic effect, making the container appear more aesthetic and sanitary.

The present invention provides a first process for producing the container described above and having a spout, the process being characterized by preparing a spout blank of thermoplastic synthetic resin comprising a tubular body, a first outward flange formed at one end of the blank tubular body integrally therewith and having an outside diameter larger than the diameter of the liquid outlet of the container, the first outward flange being positionable along one of the inner and outer surfaces of the outlet edge portion, and a flange forming portion provided on an outer periphery of the blank tubular body integrally therewith and spaced apart from the first outward flange axially of the blank tubular body, the flange forming portion being insertable through the liquid outlet of the container, inserting the blank tubular body through the liquid outlet of the container to position the first outward flange along one of the inner and outer surfaces of the outlet edge portion, clamping the first outward flange thus positioned, the outlet edge portion of the container and the flange forming portion between a sealing member and an anvil, joining the first outward flange to the outlet edge portion of the container by heat sealing, and forming a second outward flange by melting the flange forming portion and joining the second outward flange to the outlet edge portion of the container by heat sealing simultaneously with the first outward flange.

The present invention provides a second process for producing the container and described above and having a spout, the process being characterized by forming the spout on a container by injection molding integrally therewith at an outlet edge portion defining a liquid outlet formed therein, the container blank being covered with a thermoplastic synthetic resin layer at least over inner and outer surfaces thereof, the spout comprising a tubular body projecting outward, and inner and outer two outward flanges formed at one end of the tubular body integrally therewith for holding the outlet edge portion of the container therebetween from inside and outside, and fixedly joining the inner and outer flanges respectively to the inner and outer surfaces of the outlet edge portion simultaneously with the formation of the spout.

The spout-equipped container of the invention can be produced relatively easily by either one of the two processes described. Especially, the second process is less costly than the first.

The present invention will be described in greater detail with reference to the accompanying drawings.

### BRIEF DESCRIPTION OF THE DRAWINGS

FIG. 1 is an enlarged view in section showing a first embodiment of spout-equipped container of the present invention;
FIG. 2 is an enlarged view in section showing a modification of a tubular body of the first embodiment and that of a cap for closing an upper-end opening of the tubular body;
FIG. 3 is a perspective view showing a first embodiment of process for producing the spout-equipped container of the invention;
FIG. 4 includes enlarged views in section showing the first embodiment of process for producing the spout-equipped container of the invention;
FIG. 5 includes enlarged views in section showing a second embodiment of process for producing a spout-equipped container of the invention;
FIG. 6 includes enlarged views in section showing a third embodiment of process for producing a spout-equipped container of the invention;
FIG. 7 includes enlarged views in section showing a fourth embodiment of process for producing a spout-equipped container of the invention;
FIG. 8 is an enlarged view in section showing a second embodiment of spout-equipped container of the invention;
FIG. 9 is an enlarged view in section showing a modification of a tubular body of the second embodiment and that of a cap for closing an upper-end opening of the tubular body;
FIG. 10 is a perspective view showing a fifth embodiment of process for producing the spout-equipped container of the invention; and
FIG. 11 is an enlarged view in section showing the fifth embodiment of process for producing the spout-equipped container of the invention.

### DESCRIPTION OF THE PREFERRED EMBODIMENTS

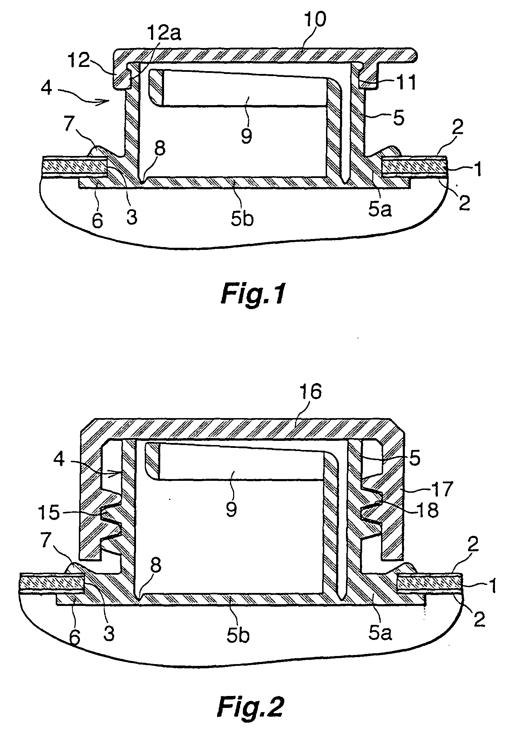

Throughout the drawings, like parts are designated by like reference numerals and will not be described repeatedly. In the following description, the upper and lower sides of FIGS. 1, 2 and 4 to 9 will be referred to as "upper" and "lower," respectively.

FIG. 1 shows a first embodiment of spout-equipped container of the invention.

With reference to FIG. 1, the container 1 is made from a paper-base laminate covered with a thermoplastic synthetic resin layer, e.g., a polyethylene layer 2, over inner and outer opposite surfaces thereof, and has a spout 4 made of a thermoplastic synthetic resin, e.g., polyethylene, and fixedly joined to an edge portion defining a liquid outlet 3 formed in a top portion of the container 1.

The spout 4 comprises a tubular body 5 having a closed lower end and an open upper end, and inner and outer two outward flanges 6, 7 formed at the lower end of the tubular body 5 integrally therewith and holding the edge portion defining the liquid outlet 3 of the container 1. The flanges 6, 7 are formed respectively on upper and lower ends of outer periphery of a large-diameter portion 5a integral with the lower end of the tubular body 5. The large-diameter portion 5a has such an outside diameter that it is snugly fittable in the liquid outlet 3. The outside diameter of the large-diameter portion 5a may be smaller than the inside diameter of the liquid outlet 3 to provide a small clearance in the outlet 3 around the large-diameter portion 5a. The outer flange 7 is slightly smaller than the inner flange 6 in outside diameter and has an outer peripheral edge positioned radially inwardly of the outer peripheral edge of the inner flange 6. The outer flange 7 has an upper surface upwardly protuberant and bulging upward at a radial midportion thereof. The inner and outer flanges 6, 7 are fixedly joined to the respective inner and outer surfaces of the edge portion defining the outlet 3 of the container 1.

The tubular body 5 has a wall 5b closing the lower end thereof and provided with an annular score 8 in its upper surface along the periphery thereof. The portion of the closing wall 5b surrounded by the score 8 is integrally provided with an upwardly projecting knob 9 for separating off this portion.

The upper-end opening of the tubular body 5 of the spout 4 is closed with a cap 10 removably fittable over the upper end of the tubular body 5. An annular groove 11 is formed in the outer periphery of an upper end portion of the tubular body 5 over the entire circumference thereof. The cap 10 includes a short cylindrical skirt 12 having such an inside diameter that the skirt 12 is fittable around the upper end portion of the tubular body 5 in intimate contact therewith. The skirt 12 is provided on its inner periphery with an annular inner protrusion 12a integral therewith and extending over the entire circumference thereof. The protrusion 12a fits in the annular groove 11, whereby the cap 10 is removably held to the upper end portion of the tubular body 5.

FIG. 2 shows a modification of the tubular body of the first embodiment and that of the cap for closing the upper-end opening of the tubular body.

The modified tubular body 5 has an externally threaded portion 15 on its outer periphery. A cap 16 includes a skirt 17 having a shorter length than the tubular body 5 and provided with an internally threaded portion 18 on its inner periphery. Using the externally and internally threaded portions 15, 18, the cap 16 is screwed on the tubular body 5 and thereby removably attached to the body 5.

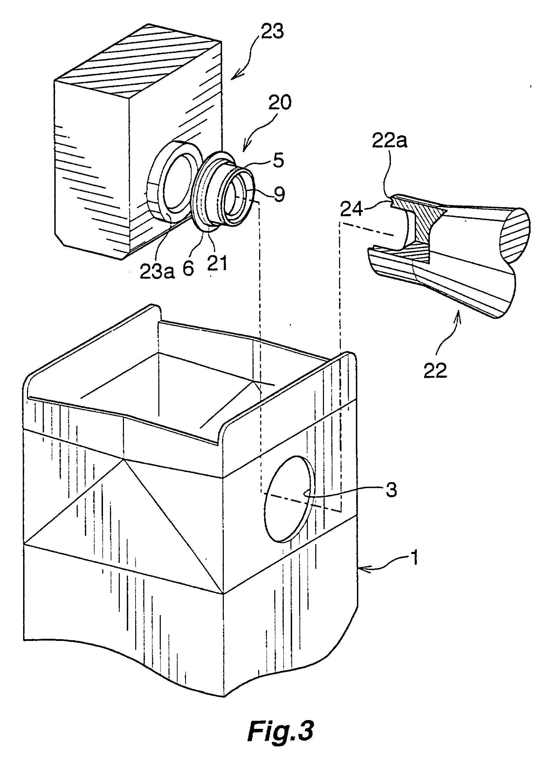

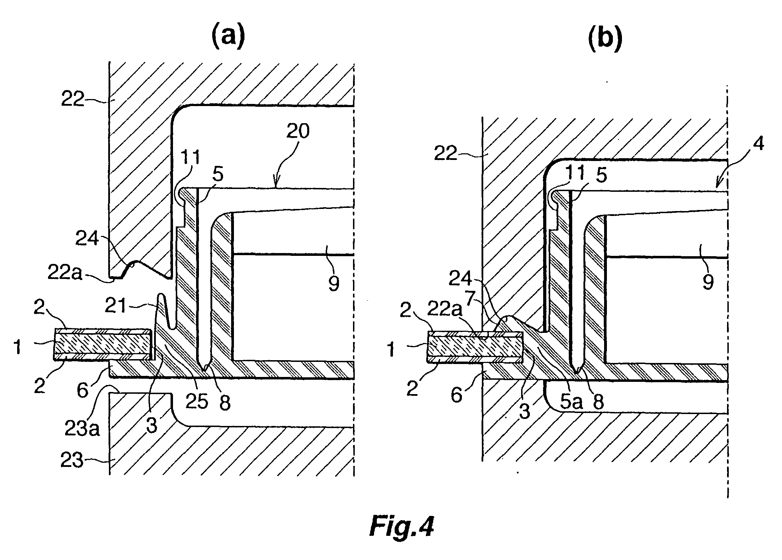

FIGS. 3 and 4 show a first embodiment of process for producing the spout-equipped container of the invention, i.e., the spout-equipped container 1 shown in FIG. 1.

First, a spout blank 20 of approximately the same shape as the spout 4 is made from polyethylene by injection molding before practicing the process. The blank 20 differs from the spout 4 in that a large-diameter portion 25 of tubular body 5 of the blank 20 at its lower end has an outside diameter which is slightly smaller than the inside diameter of the liquid outlet 3, and that in place of the outer flange 7 of the spout 4, an upwardly projecting annular flange forming portion 21 is formed along the outer periphery of upper end of the large-diameter portion 25 integrally therewith over the entire circumference [see FIG. 4(a)].

The portion of tubular body 5 of the spout blank 20 above the inner outward flange 6 thereof is then inserted through the liquid outlet 3 formed in the top portion of a container 1 from inside the container 1 to position the inner flange 6 beneath the inner surface of the edge portion defining the outlet 3. The flange forming portion 21, the outlet-defining edge portion of the container 1 and the inner flange 6 in this state are clamped between an annular clamping face 22a of a horn 22 (sealing member) of an ultrasonic sealing device disposed outside the container 1 and an annular clamping face 23a of an anvil 23 disposed inside the container 1. The clamping face 22a of the horn 22 and the clamping face 23a of the anvil 23 are equal in width. The width of the anvil clamping face 23a is equal to the distance from the outer periphery of the inner flange 6 to a radial intermediate portion of the large-diameter portion 25. A V-shaped flange forming annular groove 24 24 is formed in the clamping face 22a of the horn 22 over the entire circumference thereof. The groove 24 is defined by a side face positioned radially inwardly of the horn 22 and slanting radially outwardly thereof toward a bottom, and a side face positioned radially outwardly of the horn and slanting radially inwardly thereof toward the bottom. The slope of the radially inward side face with respect to the clamping face 22a is smaller than the slope of the radially outward side face with respect to the clamping face 22a. The portion of the horn clamping face 22a positioned radially outwardly of the groove 24 is brought into contact with the outer surface of the outlet-defining edge portion of the container 1, while the clamping face portion positioned radially inwardly of the groove is brought into contact with the upper end face of the large-diameter portion 25 positioned radially inwardly of the flange forming portion 21 [see FIG. 4(a)].

Ultrasonic waves are then produced from the horn 22, whereby the inner outward flange 6 is joined to the inner surface of the edge portion defining the outlet 3 by heat sealing. At the same time, an outer outward flange 7 is formed by molten synthetic resin provided by the flange forming portion 21 on melting and filling the groove 24, and is joined to the outer surface of the outlet-defining edge portion of the container 1 by heat sealing. The molten resin afforded by the flange forming portion 21 further fills up a clearance in the liquid outlet 3 around the large-diameter portion 25 to form a large-diameter portion 5a [see FIG. 4(b)]. In this way, the spout-equipped container is produced.

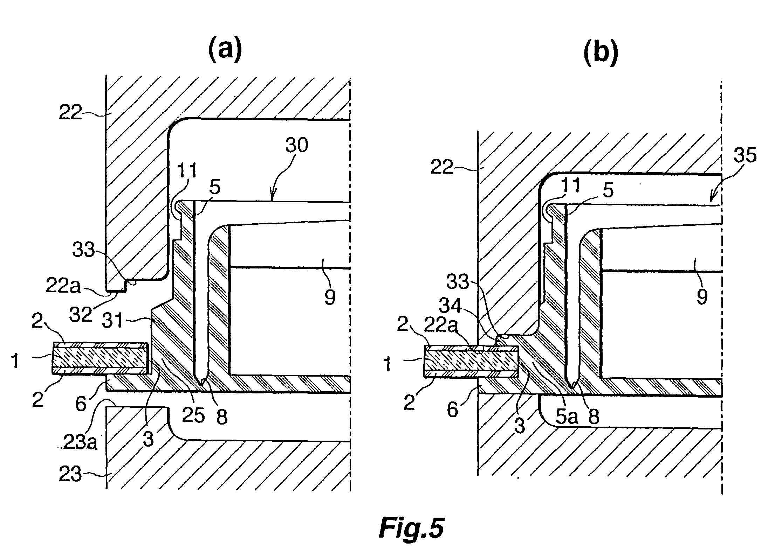

FIG. 5 shows a second embodiment of process for producing a spout-equipped container of the present invention.

As shown in FIG. 5(a), a spout blank 30 of approximately the same shape as the spout 4 shown in FIG. 1 is first made from polyethylene by injection molding before practicing the process. The blank 30 differs from the spout blank 20 shown in FIG. 4 in that in place of the annular flange forming portion 21, a flange forming portion 31 integral with the upper end of the large-diameter portion 25 and equal to this portion 25 in outside diameter is formed integrally with the portion 25 and the tubular body 5. The flange forming portion 31 has an upper end face slanting downward radially outwardly of the body 5.

The portion of tubular body 5 of the spout blank 30 above the inner outward flange 6 thereof is then inserted through the liquid outlet 3 formed in the top portion of a container 1 from inside the container 1 to position the inner flange 6 beneath the inner surface of the edge portion defining the outlet 3. The flange forming portion 31, the outlet-defining edge portion of the container 1 and the inner flange 6 in this state are clamped between an annular clamping face 22a of horn 22 (sealing member) of an ultrasonic sealing device disposed outside the container 1 and an annular clamping face 23a of an anvil 23 disposed inside the container 1. The clamping face 22a of the horn 22 comprises a radially outward face portion 32 to be brought into contact with the outer surface of the edge portion defining the liquid outlet 3 of the container 1, and a radially inward face portion 33 slightly recessed upward from the face portion 32 and cooperative with the outer surface of the outlet-defining edge portion to define a flange forming clearance therebetween [see FIG. 5(a)].

Ultrasonic waves are then produced from the horn 22, whereby the inner outward flange 6 is joined to the inner surface of the edge portion defining the outlet 3 by heat sealing. At the same time, an outer outward flange 34 is formed by molten synthetic resin provided by the flange forming portion 31 on melting and filling the clearance between the radially inward face portion 33 and the outer surface of the edge portion defining the outlet 3 of the container 1, and is joined to the outer surface of the outlet-defining edge portion of the container 1 by heat sealing. The molten resin afforded by the flange forming portion 31 further fills up a clearance in the liquid outlet 3 around the large-diameter portion 25 to form a large-diameter portion 5a [see FIG. 5(b)]. In this way, the spout-equipped container is produced.

With the spout-equipped container thus produced, the outer outward flange 34 of the resulting spout 35 is smaller than the inner outward flange 6 in outside diameter and has an outer peripheral edge which is positioned radially inwardly of the corresponding edge of the inner flange 6.

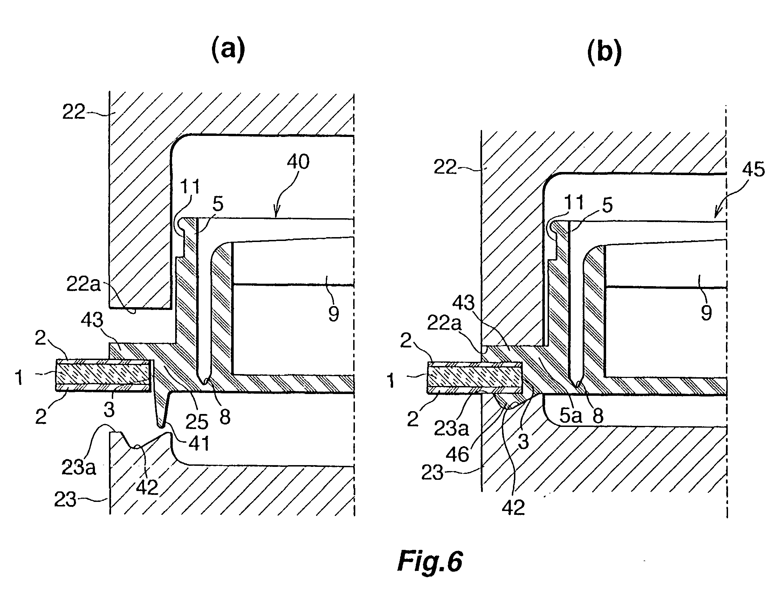

FIG. 6 shows a third embodiment of process for producing a spout-equipped container of the present invention.

As shown in FIG. 6(a), a spout blank 40 of approximately the same shape as the spout 4 shown in FIG. 1 is first made from polyethylene by injection molding before practicing the process. The blank 40 differs from the spout blank 20 shown in FIG. 4(a) in that the flange forming portion 21 is replaced by an outer outward flange 43 formed on the outer peripheral upper end of the large-diameter portion 25, and that in place of the inner outward flange 6, a downwardly projecting annular flange forming portion 41 is formed along the outer periphery of lower end of the large-diameter portion 25 integrally therewith over the entire circumference.

The portion of tubular body 5 of the spout blank 40 below the outer outward flange 43 thereof is then inserted through the liquid outlet 3 formed in the top portion of a container 1 from outside the container 1 to position the outer flange 43 along the outer surface of the edge portion defining the outlet 3. The outer flange 43, the outlet-defining edge portion of the container 1 and the flange forming portion 41 in this state are clamped between an annular clamping face 22a of horn 22 (sealing member) of an ultrasonic sealing device disposed outside the container 1 and an annular clamping face 23a of an anvil 23 disposed inside the container 1. The annular clamping face 22a of the horn 22 is flat. A V-shaped flange forming annular groove 42 is formed in the clamping face 23a of the anvil 23 over the entire circumerence thereof. The groove 42 is defined by a side face positioned radially inwardly of the anvil 23 and slanting radially outwardly thereof toward a bottom, and a side face positioned radially outwardly of the anvil and slanting radially inwardly thereof toward the bottom. The slope of the radially inward side face with respect to the clamping face 23a is smaller than the slope of the radially outward side face with respect to the clamping face 23a. The portion of the anvil clamping face 23a positioned radially outwardly of the groove 42 is brought into contact with the inner surface of the outlet-defining edge portion of the container 1, while the clamping face portion positioned radially inwardly of the groove is brought into contact with the lower end face of the large-diameter portion 25 positioned radially inwardly of the flange forming portion 41 [see FIG. 6(a)].

Ultrasonic waves are then produced from the horn 22, whereby the outer outward flange 43 is joined to the outer surface of the edge portion defining the outlet 3 by heat sealing. At the same time, an inner outward flange 46 is formed by molten synthetic resin provided by the flange forming portion 41 on melting and filling the groove 42, and is joined to the inner surface of the outlet-defining edge portion of the container 1 by heat sealing. The molten resin afforded by the flange forming portion 41 further fills up a clearance in the liquid outlet 3 around the large-diameter portion 25 to form a large-diameter portion 5a [see FIG. 6(b)]. In this way, the spout-equipped container is produced.

With the spout-equipped container thus produced, the inner outward flange 46 of the resulting spout 45 is smaller than the outer outward flange 43 in outside diameter and has an outer peripheral edge which is positioned radially inwardly of the corresponding edge of the outer flange 43. The inner flange 46 has a lower surface downwardly protuberant and bulging downward at a radial midportion thereof.

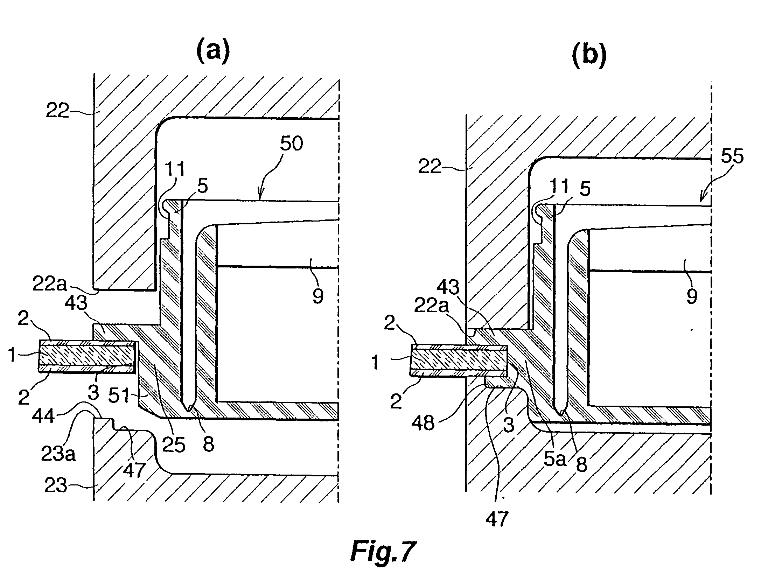

FIG. 7 shows a fourth embodiment of process for producing a spout-equipped container of the present invention.

As shown in FIG. 7(a), a spout blank 50 of approximately the same shape as the spout 4 shown in FIG. 1 is first made from polyethylene by injection molding before practicing the process. The blank 50 differs from the spout blank 40 shown in FIG. 6(a) in that in place of the annular flange forming portion 41, a flange forming portion 51 extending downward from the large-diameter portion 25 and equal to this portion 25 in outside diameter is formed integrally with the portion 25 and the tubular body 5 by increasing the vertical length of the tubular body 5 and the large-diameter portion 25. The flange forming portion 51 has a lower end face slanting upward radially outwardly of the body 5.

The portion of tubular body 5 of the spout blank 50 below the outer outward flange 43 thereof is then inserted through the liquid outlet 3 formed in the top portion of a container 1 from outside the container 1 to position the outer flange 43 along the outer surface of the edge portion defining the outlet 3. The outer outward flange 43, the outlet-defining edge portion of the container 1 and the flange forming portion 51 in this state are clamped between an annular clamping face 22a of horn 22 (sealing member) of an ultrasonic sealing device disposed outside the container 1 and an annular clamping face 23a of an anvil 23 disposed inside the container 1. The clamping face 22a of the horn 22 is flat. The clamping face 23a of the anvil 23 comprises a radially outward face portion 44 to be brought into contact with the inner surface of the edge portion defining the liquid outlet 3 of the container 1, and a radially inward face portion 47 slightly recessed downward from the face portion 44 and cooperative with the inner surface of the outlet-defining edge portion to define a flange forming clearance therebetween.

Ultrasonic waves are then produced from the horn 22, whereby the outer outward flange 43 is joined to the outer surface of the edge portion defining the outlet 3 by heat sealing. At the same time, an inner outward flange 48 is formed by molten synthetic resin provided by the flange forming portion 51 on melting and filling the clearance between the radially inward face portion 47 and the inner surface of the edge portion defining the outlet 3 of the container 1, and is joined to the inner surface of the outlet-defining edge portion of the container 1 by heat sealing. The molten resin afforded by the flange forming portion 51 further fills up a clearance in the liquid outlet 3 around the large-diameter portion 25 to form a large-diameter portion 5a [see FIG. 7(b)]. In this way, the spout-equipped container is produced.

With the spout-equipped container thus produced, the inner outward flange 48 of the resulting spout 55 is smaller than the outer outward flange 43 in outside diameter and has an outer peripheral edge which is positioned radially inwardly of the corresponding edge of the outer flange 43.

According to the first to fourth embodiments of process for producing spout-equipped containers of the invention, the flange forming portion 21, 31, 41 or 51 serves as a guide for inserting the tubular body 5 of the spout blank 20, 30, 40 or 50 through the liquid outlet 3 of the container 1. Further with the first to fourth embodiments, the molten resin provided by the flange forming portions 21, 31, 41 or 51 on melting need not always fill up the clearance in the liquid outlet 3 around the large-diameter portion, but a small clearance may remain in the outlet 3 around the large-diameter portion 5a of the spout 4, 35, 45 or 55 obtained on the container 1 produced.

Further in the case where the molten resin afforded by the flange forming portion 21, 31, 41 or 51 on melting fills up the clearance in the outlet 3 around the large-diameter portion 25 to form a large-diameter portion 5a according to the first to fourth embodiments of process for producing spout-equipped containers of the invention, the flange forming portion 21, 31, 41 or 51 need not always be made into the outward flange 7, 34, 46 or 48, insofar as the large-diameter portion 5a is joined by heat sealing to the portion of the polyethylene layer 2 exposed at the inner periphery defining the liquid outlet 3 which layer 2 is positioned on opposite side to the position where the outward flange 6 or 43 is originally provided.

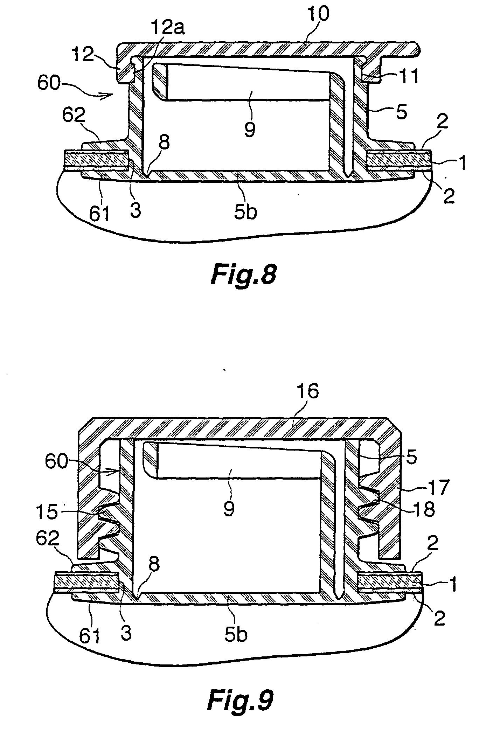

FIG. 8 shows a second embodiment of spout-equipped container of the invention.

FIG. 8 shows a spout 60 which differs from the spout 4 shown in FIG. 1 in that inner and outer flanges 61, 62 are formed directly on a tubular body 5 integrally therewith without providing an intervening large-diameter portion, and that the inner and outer flanges 61, 62 are equal to each other in outside diameter and symmetrical in section about a horizontal line positioned therebetween. The spout 60 is otherwise identical with the spout 4 of FIG. 1.

FIG. 9 shows a modification of the tubular body 5 of the second embodiment and that of the cap thereof for closing the upper-end opening of the tubular body.

As is the case with the modifications shown in FIG. 2, an externally threaded portion 15 formed on the outer periphery of the tubular body 5 and an internally threaded portion 18 formed on the inner periphery of a skirt 17 are used for screwing the cap 16 on the tubular body 5, whereby the cap 16 is removably attached to the tubular body 5.

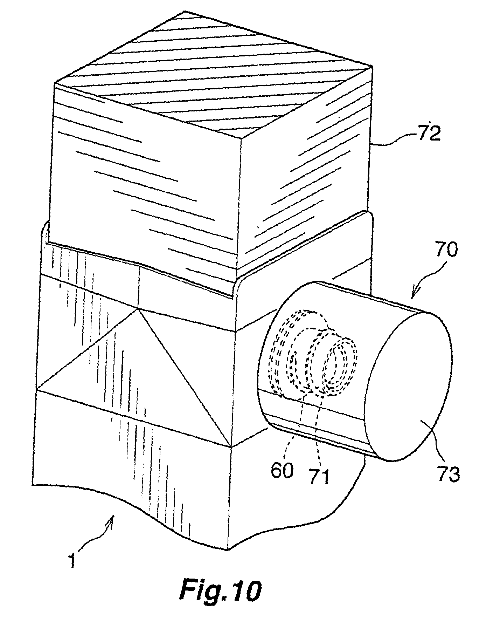

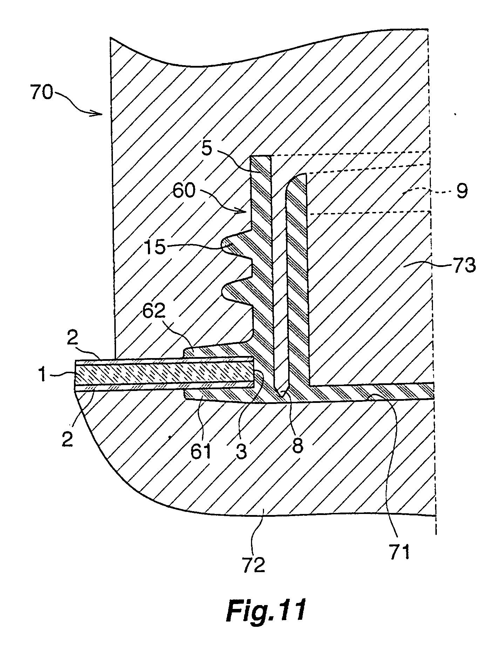

FIGS. 10 and 11 show a fifth embodiment of process for producing the spout-equipped container of the invention shown in FIG. 9.

With reference to FIGS. 10 and 11, an injection molding mold 70 having a cavity 71 which is shaped in conformity with the shape of the spout 60 is disposed for the edge portion of a container 1 defining a liquid outlet 3 thereof. The mold 70 comprises an inner mold segment 72 disposed inside the container 1, and an outer mold segment 73 disposed outside thereof. A molten thermoplastic resin, such as molten polyethylene, is injected into the mold 70 from the nozzle of an injector via a sprue, runner and gate (not shown), whereby a spout 60 is molded integrally which comprises an outwardly projecting tubular body 5, and inner and outer two outward flanges 61, 62 formed at one end of the tubular body 5 integrally therewith for holding the outlet-defining edge portion of the container 1 therebetween from inside and outside, with the inner and outer flanges 61, 62 fixedly joined respectively to the inner and outer surfaces of the edge portion defining the liquid outlet 3. In this way, the spout-equipped container is produced.

The spout-equipped container shown in FIG. 8 is produced also in the same manner as above.

In producing spout-equipped containers by the processes described above, the bottom of the container 1 is formed before the spout is fixedly provided in place, or is formed alternatively after the spout is fixedly provided.

## Claims

1. A container having a spout of thermoplastic synthetic resin fixed to an outlet edge portion defining a liquid outlet formed in a top portion of the container, the outlet edge portion of the container being covered with a thermoplastic synthetic resin layer at least over inner and outer surfaces thereof, the spout comprising a tubular body, and inner and outer two outward flanges formed at one end of the tubular body integrally therewith and holding the outlet edge portion of the container therebetween from inside and outside, the inner and outer flanges being fixed respectively to the inner and outer surfaces of the outlet edge portion of the container.

2. A container having a spout according to claim 1 wherein the outer flange is smaller than the inner flange in outside diameter.

3. A container having a spout according to claim 2 wherein the outer flange has an upper surface upwardly protuberant in cross section and bulging upward at a radial midportion thereof.

4. A container having a spout according to claim 1 wherein the inner flange is smaller than the outer flange in outside diameter.

5. A container having a spout according to claim 4 wherein the inner flange has a lower surface downwardly protuberant in cross section and bulging downward at a radial midportion thereof.

6. A container having a spout according to claim 1 wherein the inner and outer flanges are equal to each other in outside diameter.

7. A process for producing a container having a spout according to claim 1, the process being **characterized by** preparing a spout blank of thermoplastic synthetic resin comprising a tubular body, a first outward flange formed at one end of the blank tubular body integrally therewith and having an outside diameter larger than the diameter of the liquid outlet of the container, the first outward flange being positionable along one of the inner and outer surfaces of the outlet edge portion, and a flange forming portion provided on an outer periphery of the blank tubular body integrally therewith and spaced apart from the first outward flange axially of the blank tubular body, the flange forming portion being insertable through the liquid outlet of the container, inserting the blank tubular body through the liquid outlet of the container to position the first outward flange along one of the inner and outer surfaces of the outlet edge portion, clamping the first outward flange thus positioned, the outlet edge portion of the container and the flange forming portion between a sealing member and an anvil, joining the first outward flange to the outlet edge portion of the container by heat sealing, and forming a second outward flange by melting the flange forming portion and joining the second outward flange to the outlet edge portion of the container by heat sealing simultaneously with the first outward flange.

8. A process for producing a container having a spout according to claim 7 wherein one of a clamping face of the sealing member and a clamping face of the anvil to be brought into contact with the flange forming portion has a flange forming annular groove formed therein over the entire circumference of the clamping face, and the second outward flange is formed by filling the groove with molten synthetic resin provided by the flange forming portion on melting.

9. A process for producing a container having a spout according to claim 8 wherein the groove is defined by a side face positioned radially inwardly of the sealing member or the anvil and in the form of slope slanting radially outwardly thereof toward a bottom.

10. A process for producing a container having a spout according to claim 7 wherein one of a clamping face of the sealing member and a clamping face of the anvil to be brought into contact with the flange forming portion is in the form of a stepped face comprising a radially outward face portion to be brought into contact with one of the inner and outer surfaces of the outlet edge portion of the container, and a radially inward face portion cooperative with said one surface of the outlet edge portion to define a flange forming clearance therebetween, and the second outward flange is formed by filling the flange forming clearance between the radially inward face portion and said one surface of the outlet edge portion with molten synthetic resin provided by the flange forming portion on melting.

11. A process for producing a container having a spout according to any one of claims 7 to 10 wherein the heat sealing is effected by ultrasonic sealing.

12. A process for producing a container having a spout according to claim 1, the process being **characterized by** forming the spout on a container by injection molding integrally therewith at an outlet edge portion defining a liquid outlet formed therein, the container blank being covered with a thermoplastic synthetic resin layer at least over inner and outer surfaces thereof, the spout comprising a tubular body projecting outward, and inner and outer two outward flanges formed at one end of the tubular body integrally therewith for holding the outlet edge portion of the container therebetween from inside and outside, and fixedly joining the inner and outer flanges respectively to the inner and outer surfaces of the outlet edge portion simultaneously with the formation of the spout.
